# EUROPÄISCHE PATENTSCHRIFT

(11) **EP 3 223 982 B1**
(45) Veröffentlichungstag und Bekanntmachung des Hinweises auf die Patenterteilung: **19.02.2020**
(21) Anmeldenummer: 15816374.1
(22) Anmeldetag: 25.11.2015
(51) Int. Cl.: B23B 31/00, B23B 31/02, B23B 31/107, B23B 31/30

(54) **SPANNFUTTER**
CLAMPING CHUCK
MANDRIN DE SERRAGE

(30) Priorität: 28.11.2014 DE 102014224373; 19.12.2014 DE 102014226648
(43) Veröffentlichungstag der Anmeldung: 04.10.2017
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Kordel, Mattias
(86) Internationale Anmeldenummer: PCT/EP2015/077624
(87) Internationale Veröffentlichungsnummer: WO 2016/083441

(56) Entgegenhaltungen:
- WO-A2-2004/056279
- DE-A1-102013 203 121
- DE-C- 962 034
- GB-A- 369 159
- US-A- 3 526 410
- US-A1- 2015 336 246

## Beschreibung

Die Erfindung betrifft ein Spannfutter gemäß Oberbegriff des Anspruchs 1. Ein solches Spannfutter ist aus dem Dokument WO2004/056279A2 bekannt.

Spannfutter der hier angesprochenen Art sind bekannt. Sie weisen einen Kupplungsabschnitt sowie einen Aufnahmeabschnitt auf, über den das Spannfutter mit einer Werkzeugmaschine unmittelbar oder über ein Zwischenstück beziehungsweise einen Adapter oder dergleichen mit einem Drehmoment beaufschlagbar ist, um ein von diesem aufgenommenes Werkzeug in Rotation zu versetzen. Der Aufnahmeabschnitt ist mit einer Ausnehmung versehen, in die eine Hülse einsetzbar ist, welche das Werkzeug aufnimmt. Sie ist mit einer Sicherungseinrichtung versehen, mit deren Hilfe das Werkzeug innerhalb der Hülse axial festgelegt wird. Die axiale Sicherung eines Werkzeugs innerhalb der Hülse ist in vielen Anwendungsbereichen von entscheidender Bedeutung, weil beispielsweise während eines Fräsvorgangs mit hoher Vorschubgeschwindigkeit das Werkzeug aus der Hülse, und damit aus dem Aufnahmeabschnitt eines Spannfutters, herausgezogen werden kann. Bekannte Sicherungseinrichtungen weisen beispielsweise mindestens einen Stift auf, welcher die Wandung der Hülse vorzugsweise in einer Ebene durchdringt, auf welcher die Längsachse der Hülse senkrecht steht. Der die Hülse durchdringende Stift tritt in Eingriff mit dem in die Hülse eingesetzten Werkzeug, beispielsweise in eine Quernut, das heißt in eine senkrecht zur Längserstreckung des Werkzeugs verlaufende Nut. Nach dem Einsetzen des Stifts in die Hülse kann das Werkzeug nicht mehr aus dieser in axialer Richtung herausgezogen werden. Bekannt ist es außerdem, in die Wandung der Hülse eine Sicherungsschraube einzudrehen, welche mit einer in der Umfangsfläche des Werkzeugs beziehungsweise dessen Schafts eingebrachte Vertiefung in Eingriff tritt. Derartige Sicherungseinrichtungen weisen folgenden Nachteil auf: Nach dem Einsetzen eines Werkzeugs in die Hülse bedarf es eines zusätzlichen Arbeitsganges, nämlich des Einsetzens eines Stifts zur axialen Fixierung des Werkzeugs innerhalb der Hülse oder Betätigung einer in die Wand der Hülse eingesetzten Schraube, die daraufhin in eine seitliche Vertiefung des Werkzeugs eingreift.

Aufgabe der Erfindung ist es daher, ein Spannfutter zu schaffen, welches diesen Nachteil vermeidet.

Zur Lösung dieser Aufgabe wird ein Spannfutter der oben genannten Art vorgeschlagen, welches die in Anspruch 1 genannten Merkmale aufweist. Dieses Spannfutter weist einen Kupplungsabschnitt auf, über welchen es mit einer Werkzeugmaschine entweder unmittelbar oder über einen Adapter, ein Zwischenstück oder dergleichen verbindbar ist, außerdem einen Aufnahmeabschnitt. Dieser weist eine Ausnehmung auf, in die eine mit einer Wand versehene Hülse einbringbar ist, in welche ein Werkzeug einsetzbar ist. Die Hülse weist eine Sicherungseinrichtung zur axialen Festlegung des Werkzeugs innerhalb der Hülse auf. Das Spannfutter zeichnet sich dadurch aus, dass die Sicherungseinrichtung einen Bolzen aufweist, der in einer Aussparung in der Wand der Hülse gelagert und unter einem spitzen Winkel, vorzugsweise im Wesentlichen in vertikaler Richtung zur Längserstreckung der Hülse beweglich ist. Die senkrecht zur Längserstreckung der Hülse gemessene Länge des Bolzens ist größer als die Dicke der Wand der Hülse. Der Bolzen kann beim Einsetzen eines Werkzeugs in das Innere der Hülse nach außen verlagert werden, also aus dem für das Werkzeug vorgesehenen Hohlraum der Hülse heraus, sodass das Werkzeug leicht einsetzbar ist. Beim Festspannen der Hülse mit dem Werkzeug innerhalb des Aufnahmeabschnitts wird der Bolzen in das Innere der Hülse und in eine in der Seitenwand des Werkzeugs vorgesehene Vertiefung hineingedrückt, sodass das Werkzeug axial in der Hülse und damit im Spannfutter gesichert ist.

Ein bevorzugtes Ausführungsbeispiel des Spannfutters zeichnet sich dadurch aus, dass der Bolzen von einem vorzugsweise als Federsteg ausgebildeten Haltearm gehalten wird, der den Bolzen mit der Hülse verbindet. Diese Ausgestaltung des Spannfutters zeichnet sich durch einen sehr einfachen Aufbau aus und ist sehr funktionssicher.

Besonders bevorzugt wird ein Ausführungsbeispiel, welches sich dadurch auszeichnet, dass der Federsteg vom Rand der den Bolzen aufnehmenden Aussparung ausgeht und mit dem Bolzen verbunden ist. Diese Art einer federnden Lagerung des Bolzens zeichnet sich durch einen äußerst geringen Raumbedarf aus, sodass weder am Aufnahmeabschnitt noch an dem aufzunehmenden Werkzeug irgendwelche Änderungen vorgenommen werden müssen, um eine Anpassung an die federnde Lagerung zu realisieren.

Ein besonders bevorzugtes Ausführungsbeispiel zeichnet sich dadurch aus, dass der Federsteg integraler Bestandteil der Wand und/oder des Bolzens ist, sodass auf Befestigungsmittel zur Anbringung des Federstegs an der Wand und/oder dem Bolzen verzichtet werden kann.

Ein weiteres bevorzugtes Ausführungsbeispiel des Spannfutters zeichnet sich dadurch aus, dass die Hülse ein Vorspannelement aufweist, welches ein in die Hülse eingesetztes Werkzeug mit einer axialen Kraft beziehungsweise Vorspannkraft beaufschlagt, sodass dieses während des Einspannens der Hülse im Aufnahmeabschnitt des Spannfutters in einer exakt vorgegebenen Axialposition angeordnet ist.

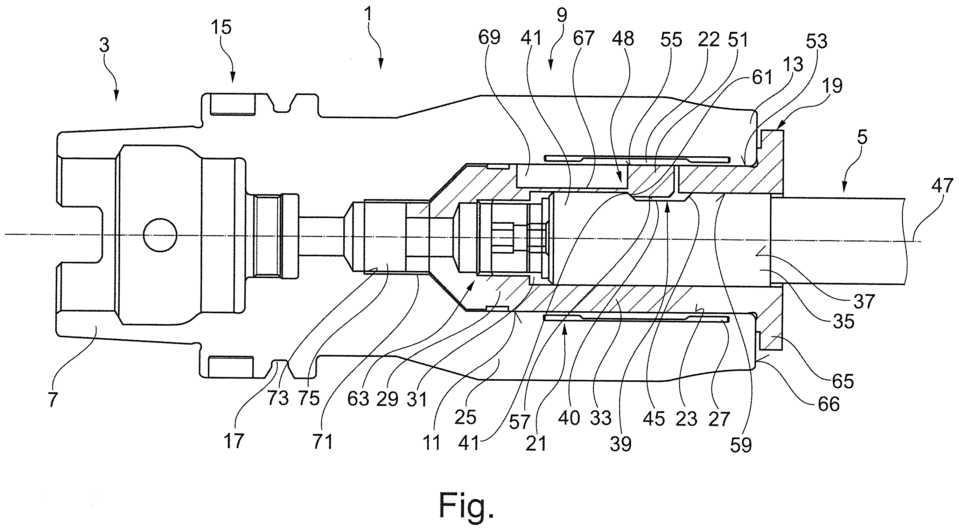

Die Erfindung wird im Folgenden anhand der Zeichnung näher erläutert. Diese umfasst eine einzige Figur, welche eine Prinzipskizze eines Längsschnitts des Spannfutters wiedergibt.

Das in der Figur wiedergegebene Spannfutter 1 weist einen Kupplungsabschnitt 3 auf, der dazu dient, das Spannfutter 1 auf bekannte Weise mit einer Werkzeugmaschine, entweder unmittelbar oder über einen Adapter, ein Zwischenstück oder dergleichen drehfest zu verbinden, um ein Drehmoment in das Spannfutter 1 einleiten zu können und damit ein in das Spannfutter 1 eingesetztes Werkzeug in Rotation zu versetzen. Bei dem Werkzeug kann es sich um einen Bohrer, Fräser, ein Schleifwerkzeug oder dergleichen handeln. Der Kupplungsabschnitt 3 weist bei dem hier dargestellten Ausführungsbeispiel einen bekannten Hohlschaft 7 auf, über den das Spannfutter 1 sicher in der Werkzeugmaschine beziehungsweise einem Adapter, Zwischenstück oder dergleichen gehalten werden kann.

Das Spannfutter 1 weist außerdem einen Aufnahmeabschnitt 9 auf, der mit einer Ausnehmung 11 versehen ist, welche sich zum freien Ende 13 des Aufnahmeabschnitts 9 öffnet. Das hier dargestellte Ausführungsbeispiel ist vorzugsweise mit einem Mittelteil 15 versehen, welches beispielsweise eine Greiferrille 17 umfasst, in die ein Greifwerkzeug zur Handhabung des Spannfutters 1 eingreifen kann, beispielsweise um es automatisch aus einer Werkzeugmaschine zu entnehmen oder in diese einzusetzen.

In die Ausnehmung 11 des Spannfutters 1 ist eine Hülse 19 eingesetzt, deren Außendurchmesser an den Innendurchmesser der Ausnehmung 11 so angepasst ist, dass die Hülse 19 sicher in der Ausnehmung 11 des Aufnahmeabschnitts 9 fixiert werden kann. Beispielhaft ist hier vorgesehen, dass der Aufnahmeabschnitt 9 ein Hydrodehnspannfutter 21 aufweist, mit dessen Hilfe die Hülse 19 und damit das in diese eingesetzte Werkzeug 5 sicher gehalten werden kann. Hydrodehnspannfutter der hier angesprochenen Art sind bekannt. Sie weisen einen dünnwandigen Wandabschnitt 22 auf, welcher zumindest bereichsweise Teil der Innenwand 23 der Ausnehmung 11 ist. In einem der Ausnehmung 11 abgewandten Bereich in der Wandung 25 des Aufnahmeabschnitts 9 ist in diesem Fall ein Hohlraum 27 vorgesehen, der mit einer Hydraulikflüssigkeit gefüllt ist, die auf geeignete und bekannte Weise mit einem Überdruck beaufschlagbar ist. Zur Fixierung der Hülse 19 in der Ausnehmung 11 des Aufnahmeabschnitts 9 wird ein Überdruck in dem Hohlraum 27 aufgebaut und damit der elastische Wandabschnitt 22 in das Innere der Ausnehmung 11 und damit gegen die Außenwand der Hülse 19 drängt. Auf diese Weise wird die Hülse 19 fest im Aufnahmeabschnitt 9 gehalten.

Denkbar ist es im Übrigen, statt eines Hydrodehnspannfutters 21 ein Schrumpffutter vorzusehen. Bei einem derartig bekannten Futter ist vorgesehen, dass der Innendurchmesser der Ausnehmung 11 etwas kleiner ist als der Außendurchmesser der im Aufnahmeabschnitt 9 zu fixierenden Hülse 19. Durch Erwärmen der Wandung 29 weitet sich die Ausnehmung 11 auf und kann damit die Hülse 19 aufnehmen. Diese kann gegebenenfalls auch noch zusätzlich gekühlt werden. Die Funktionsweise eines Spannfutters ist bekannt, sodass hier nicht näher darauf eingegangen wird.

Die Hülse 19 weist einen Grundkörper 29 auf, der eine einen Hohlraum 31 seitlich umschließende Wand 33 aufweist, deren Außendurchmesser kleiner ist als der Innendurchmesser der Ausnehmung 11 und deren Innendurchmesser im Bereich des Hohlraums 31 etwas größer ist als der des Werkzeugs 5, welches vorzugsweise mit einem Schaft 35 versehen ist, der im Inneren der Hülse 19 beziehungsweise in dem Hohlraum 31 angeordnet ist.

In die Umfangsfläche 37 des Schafts 35 ist eine Vertiefung 39 eingebracht, welche zumindest auf dem im Inneren der Hülse 19 liegenden Ende 41 des Schafts 37 eine schräge Begrenzungsfläche aufweist, die von einem Boden 43 der Vertiefung 39 ausgeht. An der gegenüberliegenden Seite des Bodens 43 kann ebenfalls eine schräge Begrenzungsfläche 45 vorgesehen werden, wobei die beiden Begrenzungsflächen 41 und 45 einen Winkel einschließen, der sich von einer Längsachse 47 des Spannfutters 1 aus gesehen nach außen öffnet.

Das Spannfutter 1 weist eine Sicherungseinrichtung 49 auf, die dazu dient, ein in den Hohlraum 31 der Hülse 19 eingesetztes Werkzeug so festzulegen, dass es - in axialer Richtung, also in Richtung der Mittelachse 47 gesehen - nicht verlagerbar ist.

Die Sicherungseinrichtung 49 des hier dargestellten Ausführungsbeispiels eines Spannfutters 1 weist einen unter einem spitzen Winkel, vorzugsweise senkrecht zur Längserstreckung der Hülse 19 verlagerbaren Bolzen 51 auf, dessen in radialer Richtung zur Mittelachse 47 gemessene Länge größer ist als die ebenfalls in dieser Richtung gemessene Dicke der Wand 33 der Hülse 19. In der Figur ist das Spannfutter 1 so dargestellt, dass die Hülse 19 in der Ausnehmung 11 fest eingespannt ist, hier also durch das Hydrodehnspannfutter 21. Der elastische Wandabschnitt 22 des Hydrodehnspannfutters 21 liegt daher von außen auf der Umfangsfläche 53 der Hülse 19 und auch auf der Außenseite 55 des Bolzens 51 fest an. Da der Bolzen 51 dicker ist als die Wand 33, ragt dessen Innenseite 57 über die Innenfläche 59 der Hülse 19 in den Hohlraum 31 hinein. Die Vertiefung 39 im Schaft 35 des Werkzeugs 1 ist, in Richtung der Mittelachse 47 gesehen, so angeordnet, dass die Innenfläche 59 des Bolzens 51 in dieser Funktionsstellung des Spannfutters 1, also insbesondere bei aktiviertem Hydrodehnspannfutter 21, innerhalb der Vertiefung 39 vorzugsweise in einem Abstand zu deren Boden 43 angeordnet ist.

Der Bolzen 51 weist eine der schrägen Begrenzungsfläche 41 der Vertiefung 39 zugewandte Fase 61 auf, die gemeinsam mit der schrägen Begrenzungsfläche 41 ein Keilgetriebe bildet. Wird also der Bolzen 51 in die Vertiefung 39 gedrängt, so wird das Werkzeug 1 mit einer Kraft beaufschlagt, die in Richtung der Mittelachse 47 in der hier dargestellten Figur nach links wirkt und das Werkzeug 5 in den Hohlraum 31 der Hülse 19 hineinzieht.

Die Figur zeigt noch, dass die Hülse 19 ein Vorspannelement 63 umfasst, welches das in den Hohlraum 31 eingesetzte Werkzeug 5 mit einer nach rechts gerichteten Kraft, die also in Richtung auf das freie Ende 13 des Aufnahmeabschnitts 9 wirkt, beaufschlagt. Diese Kraft bewirkt, dass das Werkzeug 5 exakt an dem Bolzen 51 anliegt und damit in einer präzise vorgegebenen axialen Ausgangslage im Spannfutter 1 fixiert wird.

Um beim Einsetzen der Hülse 19 in die Ausnehmung 11 des Aufnahmeabschnitts 9 eine exakte axiale Ausgangsposition zu gewährleisten, ist die Hülse 19 mit einem Kragen 65 versehen, welcher auf der am Ende 13 vorgesehenen Stirnfläche 66 des Spannfutters 1 aufliegt, wenn die Hülse 19 in die Ausnehmung 11 eingeschoben wird. Durch die damit exakt vorgegebene Ausgangsposition der Hülse 19 im Aufnahmeabschnitt 9 und durch die Gewährleistung der axialen Position des Werkzeugs 5 im Inneren der Hülse 19 mittels des Vorspannelements 63 und der Sicherungseinrichtung 49 kann nach dem Einsetzen eines Werkzeugs 5 in das Spannfutter 1 dessen axiale Ausgangsposition exakt eingestellt werden.

Der in der Figur wiedergegebenen Prinzipskizze des Spannfutters 1 ist zu entnehmen, dass die Sicherungseinrichtung 49 den Bolzen 51 umfasst. Dieser wird bei dem hier dargestellten Ausführungsbeispiel von einem Haltearm 67 in einer Aussparung 69 in der Wand 33 der Hülse 19 an der hier dargestellten, gewünschten Position gehalten. Vorzugsweise ist der Haltearm 67 als Federsteg ausgebildet, sodass der Bolzen 51 an einer gewünschten Position in der Aussparung 69 gehalten wird. Erfindungsgemäß ist der Bolzen 51 so positioniert, dass dessen Außenseite 55 mit der Umfangsfläche 53 der Hülse 19 fluchtet. Dabei kann die Außenseite 55 des Bolzens 51 zylindrisch geschliffen sein, das heißt, sie liegt nach dem Einsetzen der Hülse 19 vollflächig an der Innenfläche 59 des Hohlraums 31 an. Wird in die Hülse 19 ein Werkzeug 5 eingeschoben, so kann der Bolzen 51 aufgrund der Eigenelastizität des Haltearms 67 nach außen federn. Wird das Werkzeug 5 tief genug in den Hohlraum 31 der Hülse 19 eingeschoben, wird der Bolzen 51, vorzugsweise federnd, in die in die Umfangsfläche 37 des Schafts 35 des Werkzeugs 5 eingebrachte Vertiefung 39 verlagert. Dadurch kann ein Benutzer erkennen, dass das Werkzeug 5 tief genug in den Hohlraum 31 eingeschoben und so gedreht ist, dass der Bolzen 51 in die Vertiefung 39 eintreten kann. Werden das Werkzeug 5 und die Hülse 19 in der in diesem Moment gegebenen Relativposition in den Aufnahmeabschnitt 9 eingeschoben, so ist dies problemlos möglich, weil die Außenseite 55 des Bolzens 51 nicht an der Stirnfläche 66 anschlägt.

Die vorzugsweise federnde Ausgestaltung des Haltearms 67 ist also für das Einbringen eines Werkzeugs 5 in die Hülse 19 vorteilhaft, weil durch das Einfedern des Bolzens 51 die gewünschte Positionierung des Werkzeugs 5 innerhalb des Hohlraums 31 erkennbar wird.

Grundsätzlich ist es möglich, den Haltearm 67 als getrenntes Element auszubilden und einerseits an dem Bolzen 51 und andererseits an der Wand 33 der Hülse 19 auf geeignete Weise anzubringen, sei es durch Löten, Schweißen, Laserschweißen oder dergleichen. Ganz besonders bevorzugt wird der vorzugsweise als Federsteg ausgebildete Haltearm 67 als integraler Bestandteil der Wand 33 und/oder des Bolzens 51 ausgebildet. Insbesondere wird bevorzugt, wenn der Bolzen 51 integraler Bestandteil der Wand 33 ist, was hier beispielhaft in der Figur durch die gemeinsame Schraffur der Hülse 19, des Haltearms 67 und des Bolzens 51 angedeutet ist.

Da der Bolzen 51 in Richtung der Mittelachse 47 gemessen länger ist als die Dicke der Wand 33, mag es vorteilhaft sein, die Wand 33 und den als Federsteg wirkenden Haltearm 67 aus einem Stück herzustellen, beispielsweise durch Laserbearbeitung einer Hülse 19 oder Drahterosion, und dann am freien Ende des Haltearms 67 den Bolzen 51 anzubringen.

Entscheidend ist, dass es keiner zusätzlichen Handhabungsschritte bedarf, um eine axiale Sicherung des Werkzeugs 5 in der Hülse 19 zu gewährleisten. Es ist also nicht erforderlich, durch die Wand 33 der Hülse quer zur Längserstreckung des Werkzeugs 5 einen Stift zu führen, der in eine Vertiefung 39 eingreift, wie sie in der Figur dargestellt ist. Auch ist es nicht erforderlich, nach Einbringen des Werkzeugs 5 in die Hülse 19 eine in der Wand 33 der Hülse 19 vorhandene Spannschraube anzuziehen. Es ist vielmehr auf einfache Wiese möglich, das Werkzeug 5 in die Hülse 19 einzustecken. Wenn der Haltearm 67 als Federsteg ausgebildet ist, wird beim Einführen des Werkzeugs 5 in den Hohlraum 31 der Bolzen 51 - vorzugsweise federnd - nach außen gedrängt. Sobald er im Bereich der Vertiefung 39 angeordnet ist, weil das Werkzeug 5 tief genug in den Hohlraum 31 eingeführt ist und sich in der gewünschten Relativdrehstellung zur Hülse befindet, federt der Bolzen 51 in die Vertiefung 39 ein, sodass die Hülse 19 nunmehr problemlos in den Hohlraum 31 eingeführt werden kann, bis sie ihre gewünschte Axialposition durch Anschlag des Kragens 65 an der Stirnfläche 66 des Aufnahmeabschnitts 9 einnimmt. Es schadet nicht, wenn das Werkzeug 5, in axialer Richtung gesehen, dabei etwas tiefer in den Hohlraum 31 eingeschoben wird, weil vorzugsweise, in Richtung der Mittelachse 67 gemessen, die Vertiefung 39 eine größere Erstreckung hat, als die Breite des Bolzens 51. Das Werkzeug 5 wird durch das Vorspannelement 63 nach Einsetzen der Hülse 19 mit der schrägen Begrenzungsfläche 41 gegen die Fase 61 des Bolzens 51 gedrängt und nimmt damit eine gewünschte Axialposition innerhalb der Hülse 19 ein. Nun kann die Hülse 19 im Aufnahmeabschnitt 9 beziehungsweise in dessen Ausnehmung 11 durch Aktivierung des Hydrodehnspannfutters 21 fixiert werden. Dadurch ist dann auch das Werkzeug 5 am Spannfutter 1 fixiert. Denkbar ist es auch, an dem dem Kragen 65 abgewandten Ende der Hülse ein Außengewinde 71 vorzusehen, welches in ein Innengewinde 73 in einer Ausnehmung 75 eingreift, die koaxial zur Mittelachse 47 in das Spannfutter 1 eingebracht ist.

Aus den Erläuterungen zur Funktionsweise der Sicherungseinrichtung 49, die bei dem hier dargestellten Ausführungsbeispiel einen von einem - vorzugsweise als Federarm ausgebildeten - Haltearm 67 gehaltenen Bolzen 51 aufweist, ergibt sich Folgendes:
Auf den mit dem Bolzen 51 verbundenen Haltearm 67 kann verzichtet werden. Entscheidend für die Funktionsweise der Sicherungseinrichtung 49 ist hier, dass der Bolzen 51 in der Wand 33 der Hülse 19 unter einem spitzen Winkel, vorzugsweise senkrecht zur Längserstreckung der Hülse 19 verlagerbar ist und eine Länge aufweist, die größer ist, als die Dicke der Wand 33. Die Verlagerbarkeit kann auch gewährleistet werden, wenn der Bolzen 51 in einer geeigneten, in der Figur nicht dargestellten Ausnehmung, beispielsweise einer Bohrung verschieblich untergebracht ist. Es ist dann möglich, dass der Bolzen 51 beim Einbringen eines Werkzeugs 5 in die Ausnehmung 11 des Aufnahmeabschnitts 9 nach außen verlagert wird, also sich von der Mittelachse 47 entfernt. Bei korrekter Ausrichtung des Werkzeugs 5, wie sie oben erläutert wurde, kann der Bolzen 51 nach dem vollständigen Einführen des Werkzeugs 5 in die Ausnehmung 11 in die in dem Werkzeug 5 beziehungsweise dessen Schaft 35 eingebrachte Vertiefung 39 hineinverlagert werden. In dieser Position wird er dann, wie bei dem oben erläuterten Ausführungsbeispiel festgehalten, beispielsweise durch den elastischen Wandabschnitt 22, bei Aktivierung des Hydrodehnspannfutters 21.

Der Bolzen 51 kann auf einfache, bekannte Weise in der zugehörigen Ausnehmung beziehungsweise Bohrung gehalten werden, beispielsweise durch einen O-Ring, der auf die Außenfläche des Bolzens 51 aufgeschoben ist. Der O-Ring kann auch in einer in die Außenfläche eingebrachten Nut untergebracht sein, oder aber in einer Nut, die in die Innenfläche der den Bolzen 51 aufnehmenden Ausnehmung beziehungsweise Bohrung eingebracht ist.

Die Hülse 19 kann vorzugsweise einen oder mehrere hier nicht dargestellte Längsschlitze in der Wand 33 aufweisen. Dadurch kann sie beim Einspannen, beispielsweise bei Aktivierung des Hydrodehnspannfutters 21, zusammengedrückt werden, sodass dadurch auch das Werkzeug 5 fest im Aufnahmeabschnitt 9 fixiert wird.

Die hier beschriebene Hülse 19 kann als Adapterhülse verwendet werden. In diesem Fall ist es erforderlich, beispielsweise Hülsen mit verschiedenem Innendurchmesser des Hohlraums 31 bereitzustellen, um verschiedene Werkzeuggrößen einbringen zu können. Auch ist es denkbar, verschiedene Hülsen 19 mit an unterschiedlichen Positionen angeordneten Bolzen 51 bereitzustellen, um auch so eine Anpassung an verschiedene Werkzeuge 5 mit verschieden positionierten Vertiefungen 39 zu ermöglichen.

Auf diese Weise kann das Spannfutter 1 mit einer vorgegebenen Ausgestaltung des Aufnahmeabschnitts 9 beziehungsweise der zugehörigen Ausnehmung 11 mit verschiedenen Hülsen 19 bestückt werden, um unterschiedliche Werkzeuge aufnehmen und in gewünschter axialer Position fixieren zu können.

## Patentansprüche

1. Spannfutter (1) mit
- einem Kupplungsabschnitt (3),
- einem eine Ausnehmung (11) aufweisenden Aufnahmeabschnitt (9),
- einer in die Ausnehmung (11) des Aufnahmeabschnitts (9) einsetzbaren, eine Wand (33) aufweisenden Hülse (19), die der Aufnahme eines Werkzeugs (5) dient, und mit
- einer Sicherungseinrichtung (49) zur axialen Festlegung eines Werkzeugs (5) innerhalb der Hülse (19), wobei
- die Sicherungseinrichtung (49) einen Bolzen (51) aufweist, der in einer Aussparung (69) in der Wand (33) der Hülse (19) gelagert und unter einem spitzen Winkel, vorzugsweise im Wesentlichen in vertikaler Richtung zur Längserstreckung der Hülse (19) beweglich ist, und dass
- die senkrecht zur Längserstreckung der Hülse (19) gemessene Länge des Bolzens (51) größer als die Dicke der Wand (33) ist,
**dadurch gekennzeichnet, dass**
- eine Außenseite (55) des Bolzens (51) mit einer äußeren Umfangsfläche (53) der Hülse (19) fluchtet, und dass
- die Außenseite (55) des Bolzens (51) zylindrisch geschliffen ist.

2. Spannfutter nach Anspruch 1, **dadurch gekennzeichnet, dass** der Bolzen (51) von einem vorzugsweise als Federsteg ausgebildeten Haltearm (67) gehalten wird, der einerseits mit dem Bolzen (51) und andererseits mit der Hülse (19) verbunden ist.

3. Spannfutter nach Anspruch 2, **dadurch gekennzeichnet, dass** der Federsteg von dem Rand der den Bolzen (51) aufnehmenden Aussparung (69) ausgeht.

4. Spannfutter nach Anspruch 3, **dadurch gekennzeichnet, dass** der Federsteg integraler Bestandteil der Wand (33) und/oder des Bolzens (51) ist.

5. Spannfutter nach einem der vorhergehenden Ansprüche, **dadurch gekennzeichnet, dass** der Bolzen (51) integraler Bestandteil der Wand (33) der Hülse (19) ist.

6. Spannfutter nach einem der vorhergehenden Ansprüche, **dadurch gekennzeichnet, dass** die Hülse (19) ein Vorspannelement (63) aufweist, welches ein in die Hülse (19) eingesetztes Werkzeug (5) mit einer axialen Kraft beaufschlagt.

## Claims

1. A clamping chuck (1) comprising
- a coupling section (3),
- a receiving section (9) having a recess (11),
- a sleeve (19), which can be inserted into the recess (11) of the receiving section (9) and has a wall (33), which serves to receive a tool (5), and comprising
- a securing device (49) for axially securing a tool (5) inside the sleeve (19), wherein
- the securing device (49) has a bolt (51), which is supported in a recess (69) in the wall (33) of the sleeve (19) and can be moved at an acute angle, preferably essentially in the vertical direction to the longitudinal extension of the sleeve (19), and that
- the length of the bolt (51), measured perpendicular to the longitudinal extension of the sleeve (19), is greater than the thickness of the wall (33), **characterised in that**
- an outer side (55) of the bolt (51) is aligned with an outer circumferential surface (53) of the sleeve (19), and that
- the outer side (55) of the bolt (51) is ground cylindrically.

2. The clamping chuck according to claim 1, **characterised in that** the bolt (51) is held by a holding arm (67), which is preferably formed as spring bar and which is connected to the bolt (51) on the one hand and to the sleeve (19) on the other hand.

3. The clamping chuck according to claim 2, **characterised in that** the spring bar starts at the edge of the recess (69), which receives the bolt (51).

4. The clamping chuck according to claim 3, **characterised in that** the spring bar is integral part of the wall (33) and/or of the bolt (51).

5. The clamping chuck according to any one of the preceding claims, **characterised in that** the bolt (51) is integral part of the wall (33) of the sleeve (19).

6. The clamping chuck according to any one of the preceding claims, **characterised in that** the sleeve (19) has a biasing element (63), which applies an axial force to the tool (5), which is inserted into the sleeve (19).

## Revendications

1. Mandrin de serrage (1) avec
- une section de couplage (3),
- une section de réception (9) présentant un évidement (11),
- un manchon (19) présentant une paroi (33), insérable dans l'évidement (11) de la section de réception (9), servant recevoir un outil (5) et avec
- un dispositif de sécurité (49) pour la fixation axiale d'un outil (5) à l'intérieur du manchon (19),
- le dispositif de sécurité (49) présentant un boulon (51) qui est déplacé dans un évidement (69) dans la paroi (33) du manchon (19) et qui est mobile sous un angle aigu, de préférence essentiellement dans le sens vertical par rapport à l'extension longitudinale du manchon (19) et
- la longueur du boulon (51) mesurée perpendiculairement à l'extension longitudinale du manchon (19), étant plus grande que l'épaisseur de la paroi (33),
**caractérisé en ce que**
- une surface extérieure (55) du boulon (51) est alignée avec une surface périphérique extérieure (53) du manchon (19) et que
- la surface extérieure (55) du boulon (51) est usinée cylindriquement.

2. Mandrin de serrage conformément à la revendication 1, **caractérisé en ce que** le boulon (51) est maintenu par un bras de support (67) formé de préférence comme barrette à ressort, lequel est assemblé d'une part avec le boulon (51) et d'autre part avec le manchon (19).

3. Mandrin de serrage conformément à la revendication 2, **caractérisé en ce que** la barrette à ressort part du bord de l'évidement (69) réceptionnant le boulon (51).

4. Mandrin de serrage conformément à la revendication 3, **caractérisé en ce que** la barrette à ressort fait partie intégrante de la paroi (33) et/ou du boulon (51).

5. Mandrin de serrage conformément à l'une des revendications précédentes, **caractérisé en ce que** le boulon (51) fait partie intégrante de la paroi (33) du manchon (19).

6. Mandrin de serrage conformément à l'une des revendications précédentes, **caractérisé en ce que** le manchon (19) présente un élément de précontrainte (63) qui alimente un outil (5) inséré dans le manchon (19) avec une force axiale.
